# EUROPÄISCHE PATENTSCHRIFT

(11) **EP 0 647 379 B1**
(45) Veröffentlichungstag und Bekanntmachung des Hinweises auf die Patenterteilung: **06.11.1996**
(21) Anmeldenummer: 93901625.9
(22) Anmeldetag: 11.01.1993
(51) Int. Cl.: H04J 3/16, H04J 3/14

(54) **VERFAHREN ZUM DURCHSCHALTEN VON DIGITALSIGNALEN**
METHOD OF SWITCHING DIGITAL SIGNALS
PROCEDE DE COMMUTATION DE SIGNAUX NUMERIQUES

(30) Priorität: 15.01.1992 DE 4200864
(43) Veröffentlichungstag der Anmeldung: 12.04.1995
(73) Patentinhaber: SIEMENS AKTIENGESELLSCHAFT, 80333 München (DE)
(72) Erfinder: HEILES, Jürgen, D-8000 München 70 (DE); HAMBORG, Franz-Otto, D-1000 Berlin 27 (DE); KERSTEN, Hans-Otto, D-1000 Berlin 45 (DE); WILD, Horst, D-1000 Berlin 47 (DE)
(86) Internationale Anmeldenummer: DE9300008
(87) Internationale Veröffentlichungsnummer: WO9314582

(56) Entgegenhaltungen:
- EP-A- 0 222 544
- EP-A- 0 407 851
- US-A- 3 207 851
- DATA COMMUNICATIONS. Bd. 16, Nr. 13, Dezember 1987, NEW YORK US Seiten 64 - 68 P. HEYWOOD ET AL. 'U.S. forging ahead with Sonet despite B-ISDN standard setback'

## Beschreibung

In dem digitalen Verbindungsnetz nach den CCITT-Empfehlungen G. 709 werden die zu übertragenen Digitalsignale in Container genannte spezielle Datenfunktionsblöcke eingefügt. Diese werden durch Hinzufügen von Zusatzinformation (POH) zu virtuellen Containern VC-n ergänzt und können ihrerseits wieder zu "Tributary Units" TU-n oder virtuellen Containern höherer Ordnung und Administrative Units zusammengefaßt werden und in einen synchronen Transportmodul STM-1 eingefügt in der 155 Mbit/s-Ebene (oder einer höheren Ebene) übertragen werden. Die Durchschaltung der Administrative oder Tributary Units über Koppelfelder (Cross-Connectoren) erfolgt in der Form spezieller Datenblöcke (Cross-Connect-Datenblöcke). Außer der Nutzinformation (Payload) sind zusätzlich Daten für Koppelwegadressen, Rechnerinformation, Fehlerüberwachung, Alarmsignale usw. zu übertragen. Der Pulsrahmen des STM-1-Signals weist für diese Daten nicht die erforderliche zusätzliche Übertragungskapazität auf.

Aus der europäischen Patentanmeldung EP-0 407 851 A3 ist ein Verfahren zur Durchschaltung von Multiplexsignalen über Cross-Connectoren bekannt. Der hier verwendete Pulsrahmen gestattet jedoch nur die Übertragung einer geringen Menge an Sonderinformation.

Aufgabe der Erfindung ist es, ein für die synchrone digitale Hierarchie geeignetes Verfahren zur Durchschaltung von Digitalsignalen anzugeben.

Diese Aufgabe wird durch das im Patentanspruch 1 angegebene Verfahren gelöst.

Vorteilhafte Weiterbildungen der Erfindung sind in den Unteransprüchen angegeben.

Der erfinderische DSM-Basispulsrahmen besteht aus 9 Zeilen und 100 Spalten mit 9-Bit-Wörtern an jeder Spaltenposition. Der Rahmen hat eine Wiederholzeit von 125 µs. Vier aufeinanderfolgende DSM-Basispulsrahmen bilden einen Überrahmen.

Vorteilhaft ist der den Signalen der Synchronen Digitalen Hierarchie angepaßter Rahmenaufbau. So stimmt die Anzahl der Zeilen überein, die Anzahl der Spalten wurde erweitert.

Die Übertragungsrate des DSM-Basispulsrahmens beträgt 64,8 Mbit/s. Bausteine für diese Übertragungsrate lassen sich mit der zur Zeit verfügbaren CMOS-ASIC-Technology herstellen. DSM-N-Signale mit N-facher Übertragungsrate lassen sich durch spaltenweises Multiplexen von DSM-1-Signalen erzeugen und werden in entsprechenden DSM-N-Pulsrahmen übertragen.

Signale der synchronenen digitalen Hierarchie (oder auch hierin eingefügte plesiochrone Signale) mit höheren Datenraten werden in mehrere Signale aufgeteilt, die dann in mehreren DSM-Basis-Pulsrahmen übertragen werden.

Die Wiederholrate der Pulsrahmen beträgt 8 kHz, dies entspricht einer Wiederholzeit von 125 µs. Das Verhältnis der Systemtakte (Bittakte) des in der Synchronen Digitalen Hierarchie übertragenen STM-1-Pulsrahmens und des DSM-Basis-Pulsrahmen beträgt 12:5. Damit ist eine einfache Ableitung des einen Systemtaktes aus dem anderen möglich. Auch bei höherrangigen Pulsrahmen, die dieselbe Wiederholzeit aufweisen, besteht ein einfaches Verhältnis der Systemtaktfrequenz.

Aus dem DSM-Basispulsrahmen lassen sich beispielsweise durch spaltenweises Verschachteln auf einfache Weise Pulsrahmen hoher Ordnung mit einer vielfachen Spaltenanzahl bilden. Das jeweils an ein Oktett des STM-1-Signals angehängte neunte Bit läßt sich zur Datensicherung oder zur Übertragung von Zusatzdaten verwenden. Die weiteren Zusatzdaten werden in den nicht von der Nutzinformation (Payload) der SDH-Signale benötigten Spalten übertragen.

Die Erfindung wird anhand von Figuren näher erläutert.

Es zeigen:
- Fig. 1: ein Koppelfeld (Cross Connector),
- Fig. 2: den Rahmenaufbau eines DSM-Basis-Pulsrahmens,
- Fig. 3: die Struktur eines DSM-1-Pulsrahmens,
- Fig. 4: den Aufbau eines DSM-N-Pulsrahmens,
- Fig. 5: die Struktur eines höherrangigen DSM-Pulsrahmens,
- Fig. 6: das Einfügen von C-4-Signalen in DSM-1- und DSM-3-Pulsrahmen und
- Fig. 7: das Einfügen von virtuellen Containern in DSM-1-Pulsrahmen.

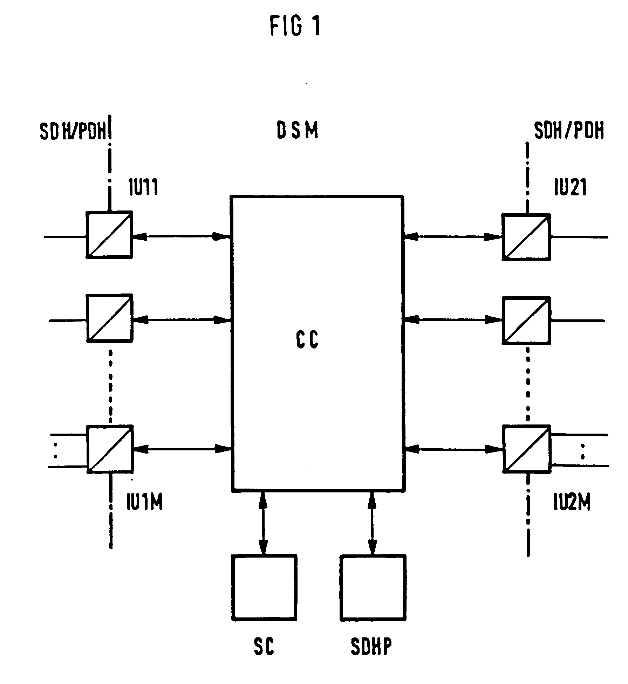

In Figur 1 ist ein Koppelfeld (Cross-Connector) CC dargestellt, das zum Durchschalten von DSM-1-Signalen dient. Die Digitalsignale der Synchronen Digitalen Hierarchie SDH oder der Plesiochronen Digitalen Hierarchie PDH werden durch spezielle Interfaceschaltungen IU11 bis IU1M und IU21 bis IU2M in Durchschaltsignale DSM-1 umgesetzt. Hierzu wird beispielsweise ein STM-1-Signal der SDH in drei DSM-1-Signale umgesetzt oder es werden mehrere Digitalsignale DS2 mit geringerer Datenrate zunächst in Container eingefügt, in Tributary Units z.B. TU-12 umgesetzt in den Basis-Pulsrahmen des DSM-1-Signals umgesetzt zum Koppelfeld durchgeschaltet. Die Interfaceschaltungen IU enthalten daher häufig zusätzlich Demultiplexer oder Multiplexer.

Ein System Controller SC bewirkt die zentrale Steuerung des Koppelfeldes und ein SDH-Prozessor SHDP übernimmt die Auswertung des SDH-Overheads bzw. dessen Hinzufügen zu den Nutzdaten.

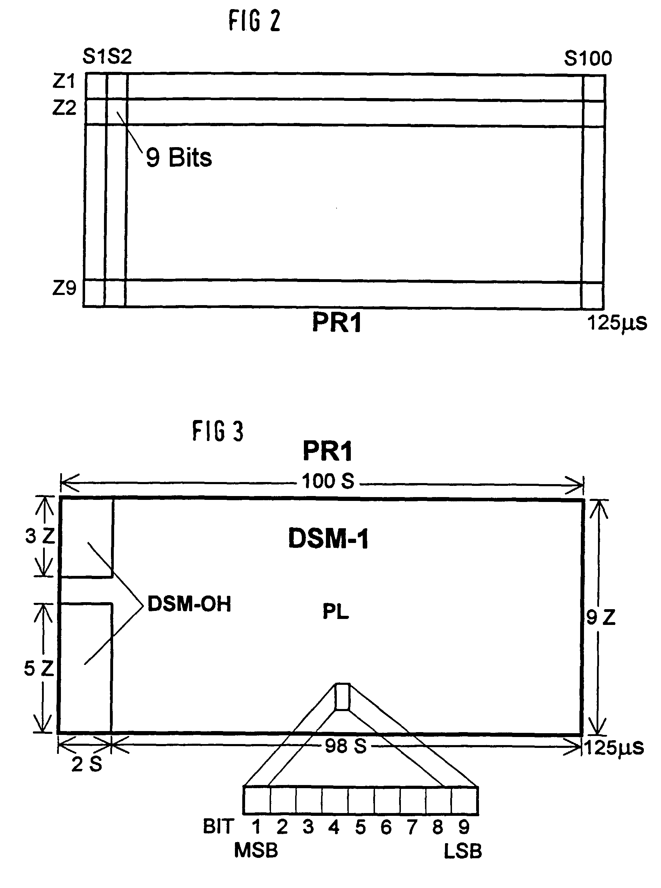

In Figur 2 ist der DSM-1-Basispulsrahmen PR1 dargestellt. Er besteht aus 9 Zeilen Z1 bis Z9 und 100 Spalten S1 bis S100. In jeder Spalte einer Zeile kann ein DSM-Datenwort mit 9 Bits Länge übertragen werden. Das aus einem Oktett (Byte) eines Digitalsignals und einem zusätzlichem Bit besteht. Dieses kann beispielsweise zur Datensicherung verwendet werden. Das in dem DSM-1-Basisblock übertragene DSM-1-Signale weist eine Datenrate von 64,8 Mbit/s auf. Mehrere nicht für die Übertragung von Nutzinformation verwendete Spalten des DSM-Basispulsrahmens können für die Übertragung von Zusatzdaten verwendet werden.

In Figur 3 ist die Struktur eines DSM-1-Basispulsrahmens PR1 mit dem Kontrollzwecken dienenden DSM-Overhead DSM-OH eingezeichnet. Von einem Datenwort des Nutzinformationsfeldes (Payload Arrea) PL werden beispielsweise die acht ersten Bits für die Nutzinformation und das neunte Bit LSB zur Übertragung von Fehlersicherungsinformation zur Überwachung der Funktion des Crossconnectors verwendet.

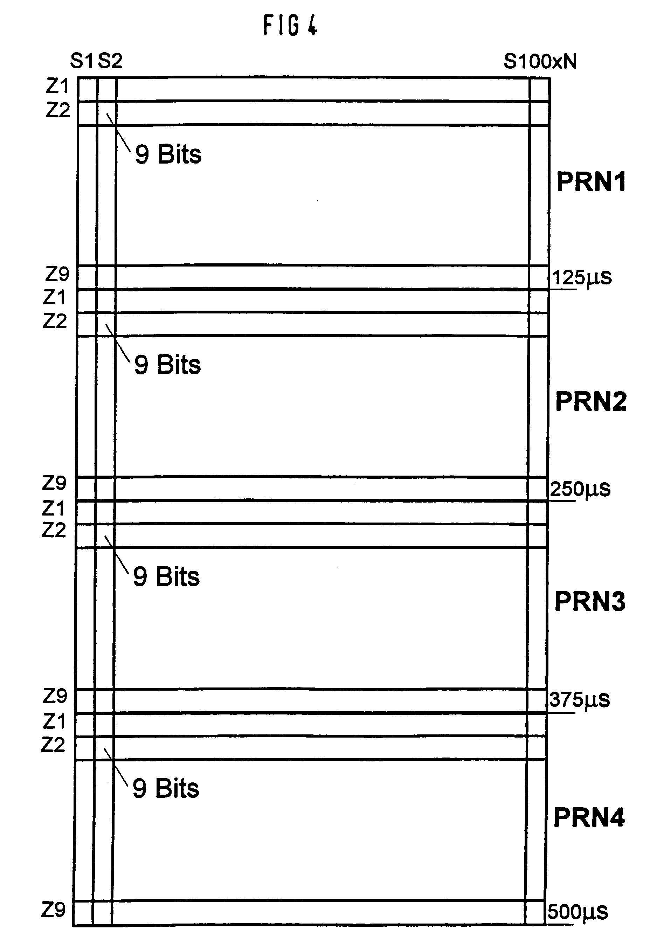

In Figur 4 ist ein höherrangiger DSM-N Pulsrahmen PRN (N ≥ 2) dargestellt. Diese Pulsrahmen weisen jeweils ein ganzzahliges Vielfaches der Spalten eines DSM-Basispulsrahmens PR1 auf.

Entsprechend der Überrahmenstruktur der Tributary Units bilden vier aufeinanderfolgende DSM-N-Pulsrahmen PRN1 bis PRN4 einen DSM-N-Überrahmen.

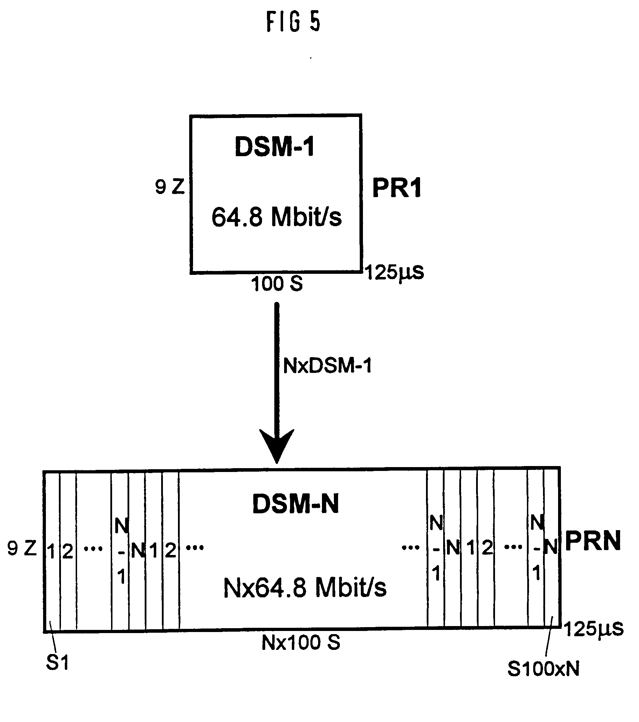

In Figur 5 ist die Bildung eines höherrangigen Pulsrahmens PRN durch Verschachteln von N DSM-1-Signalen dargestellt. Die in DSM-Basispulsrahmen PR1 eingeordneten DSM-1-Signale werden wortweise miteinander verschachtelt. So wird das erste DSM-Datenwort des ersten DSM-1-Signals in die erste Spalte S1 des PRN Pulsrahmens eingefügt, dann das erste DSM-Datenwort des zweiten DSM-1-Signals und so weiter bis das erste Datenwort des (N-1). DSM-1-Signals in die (N-1). Spalte und dann das N. DSM-1-Signals in die N-te Spalte eingefügt ist. Anschließend werden die zweiten Datenwörter der ersten Zeile eingefügt bis schließlich die DSM-1-Signale spaltenweise im DSM-N-Pulsrahmen PRN verschachtelt sind.

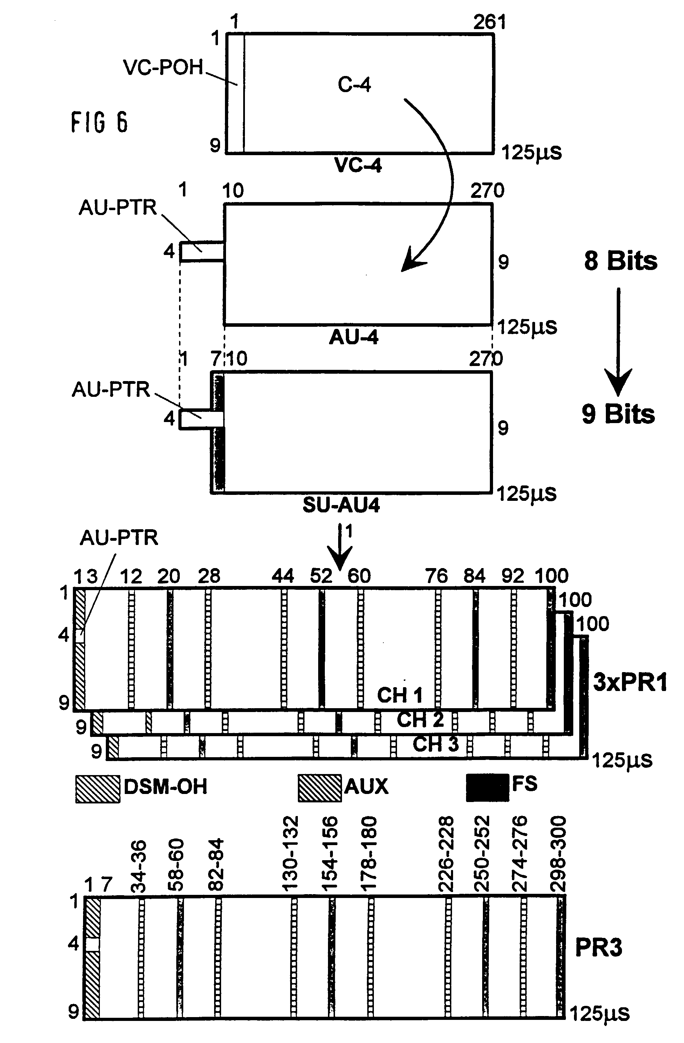

In Figur 6 ist das Einfügen eines Containers C-4 in drei DSM-Basispulsrahmen dargestellt. Nach der Bildung einer Administrative Unit AU4 und Hinzufügen der neunten Bits wird die modifizierte Administrative Unit SU-AU4 mit DSM-Datenwörtern und einen Pointer AU-Ptr erfolgt die Aufteilung der Daten auf drei DSM-Basispulsrahmen PR1. Vier Spalten sind mit fester Stopfinformation FS versehen. Sechs Spalten sind zur Übertragung von Zusatzinformation vorgesehen. Selbstverständlich kann auch eine andere Anordnung der Spalten zur Übertragung der Zusatzinformation (Hilfsinformation) AUX gewählt werden. Die drei DSM-Basispulsrahmen werden wiederum durch wort- bzw. spaltenweises Verschachteln zu einem DSM-3-Pulsrahmen PR3 zusammengefaßt.

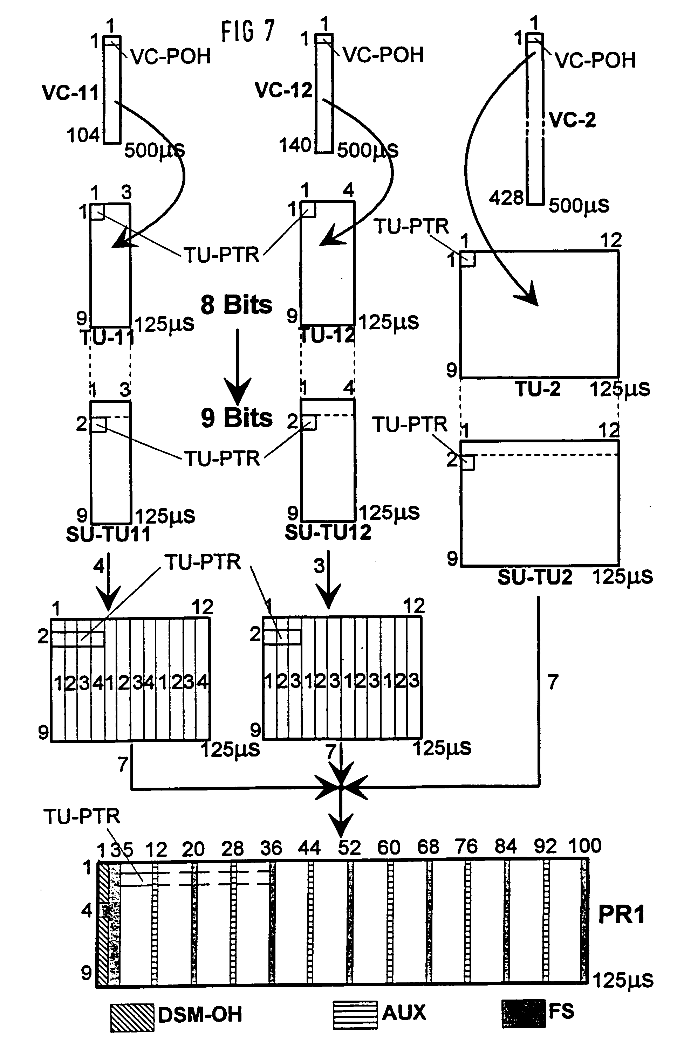

Als weiteres Beispiel ist in Figur 7 das Einfügen von virtuellen Containern VC-11, VC-12 und VC-2 in einen DSM-Basis-pulsrahmen PR1 dargestellt. Die virtuellen Container VC werden in Tributary Units TU eingefügt (mappen), wobei ein Pointer Ptr hinzugefügt wird. Anschließend wird zu jedem Oktett ein Bit hinzugefügt wodurch sich die modifizierten Tributary Units SU-TU ergeben. Mehrere dieser Tributary Units SU-TU werden wortweise miteinander verschachtelt (word interleaved) wodurch sich im Endeffekt ein spaltenweises Verschachteln der unterschiedlichen Tributary Units ergibt. Die so entstandenen Datenblöcke entsprechen im Format weitgehend der Tributary Unit SU-TU2.

In einen DSM-Basispulsrahmen können nun diese Funktionsblöcke mit gleichen oder unterschiedlichen Strukturen - je nachdem welche virtuellen Container zusammengefaßt sind - "eingemapped" werden. Dies geschieht wieder durch wortweises Verschachteln, so daß immer im Ergebnis die Funktionsblöcke in einen DSM-Basispulsrahmen wieder spaltenweise verschachtelt sind.

Die Struktur des sich ergebenen Funktionsdatenblockes entspricht der eines SDH-Funktionsblockes TUG-3.
Die in Figur 6 und Figur 7 dargestellten Vorgehensweisen sind nur als Beispiel zu betrachten. Es können auch beispielsweise eine AU-3, eine TU-3 oder 96 Spalten an Zusatzinformation in einem DSM-Basispulsrahmen übertragen werden Auch können mehrere Umformungen der Datenfunktionsblöcke gleichzeitig vorgenommen werden.

## Patentansprüche

1. Verfahren zum Durchschalten von Digitalsignalen (DS) in einem SDH-Netz (SDH: Synchrone Digitale Hierarchie) **dadurch gekennzeichnet,**
daß die Digitalsignale (DS) in DSM-Pulsrahmen (PRN) eingefügt werden, die - in zweidimensionaler Darstellung - jeweils 9 Zeilen (Z1...Z9) und 100 N (N = 1, 2, 3, ...) Spalten aufweisen, wobei in jeder Position einer Spalte ein 9 Bits umfassendes DSM-Datenwort übertragbar ist, von dem ein aus 8 Bits bestehendes Oktett zur Übertragung des Digitalsignals (DS) verwendet wird.

2. Verfahren nach Anspruch 1,
**dadurch gekennzeichnet,**
daß jedem Oktett des Digitalsignals ein weiteres Bit zur Übertragung von Überwachungs - und Steuerinformation vorgesehen ist.

3. Verfahren nach Anspruch 1,
**dadurch gekennzeichnet,**
daß ein DSM-Basis-Pulsrahmen (PR1) 9 Zeilen und 100 Spalten umfaßt.

4. Verfahren nach Anspruch 2,
**dadurch gekennzeichnet,**
daß DSM-Pulsrahmen (PRN, N ≥≥ 2) höherer Ordnung durch spaltenweises Verschachteln von DSM-Basispulsrahmen (PR1) erzeugt werden.

5. Verfahren nach einem der vorhergehenden Ansprüche,
**dadurch gekennzeichnet,**
daß Digitalsignale (AU-4) mit höheren Datenraten der synchronen digitalen Hierarchie auf mehrere DSM-Basis-Pulsrahmen (PR1) aufgeteilt werden.

6. Verfahren nach einem der vorhergehenden Ansprüche,
**dadurch gekennzeichnet,**
daß das STM-1-Signal und jeder DSM-Pulsrahmen (PRN) dieselbe Periodendauer (125 µs) aufweisen.

7. Verfahren nach einem der vorhergehenden Ansprüche,
**dadurch gekennzeichnet**,
daß das Verhältnis der Systemtaktfrequenzen der STM-1-Rahmen und der DSM-Basispulsrahmen (PR1) 12 zu 5 ist.

8. Verfahren nach einem der vorhergehenden Ansprüche,
**dadurch gekennzeichnet,**
daß vier aufeinanderfolgende DSM-N-Pulsrahmen (PRN) einen DSM-Überrahmen bilden.

## Claims

1. Method for switching through digital signals (DS) in an SDH network (SDH: Synchronous Digital Hierarchy), characterized in that the digital signals (DS) are inserted into DSM pulse frames (PRN) which have - in two-dimensional representation - in each case 9 lines (Z1...Z9) and 100 N (N = 1, 2, 3, ...) columns, it being possible to transmit a DSM data word comprising 9 bits in every position of a column, of which an octet comprising 8 bits is used for transmitting the digital signal (DS).

2. Method according to Claim 1, characterized in that a further bit for transmitting monitoring and control information is provided for each octet of the digital signal.

3. Method according to Claim 1, characterized in that a DSM base pulse frame (PR1) comprises 9 lines and 100 columns.

4. Method according to Claim 2, characterized in that higher-order DSM pulse frames (PRN, N ≥≥ 2) are generated by column-by-column interlacing of DSM base pulse frames (PR1).

5. Method according to one of the preceding claims, characterized in that digital signals (AU-4) having higher data rates of the synchronous digital hierarchy are distributed over a plurality of DSM base pulse frames (PR1).

6. Method according to one of the preceding claims, characterized in that the STM-1 signal and each DSM pulse frame (PRN) have the same period length (125 µs).

7. Method according to one of the preceding claims, characterized in that the ratio of the system clock frequencies of the STM-1 frames and the DSM base pulse frames (PR1) is 12 to 5.

8. Method according to one of the preceding claims, characterized in that four successive DSM-N pulse frames (PRN) form one DSM multiframe.

## Revendications

1. Procédé de transmission de signaux numériques (DS) dans un réseau SDH (SDH : hiérarchie numérique synchrone),
caractérisé en ce que
on insère les signaux numériques (DS) dans des trames (PRN) d'impulsions DSM, qui comportent chacune, en représentation bidimensionnelle, 9 lignes (Z1 ... Z9) et 100 N (N = 1, 2, 3, ...) colonnes, on peut transmettre dans chaque position d'une colonne un mot de donnée DSM comprenant 9 bits, par lequel on utilise un octet de 8 bits pour la transmission du signal numérique (DS).

2. Procédé suivant la revendication 1,
caractérisé en ce que
on prévoit pour chaque octet du signal numérique un bit supplémentaire pour la transmission d'information de contrôle et de commande.

3. Procédé suivant la revendication 1,
caractérisé en ce que
une trame (PR1) d'impulsions de base DSM comprend 9 lignes et 100 colonnes.

4. Procédé suivant la revendication 2,
caractérisé en ce que
on produit des trames (PRN, N >> 2) d'impulsions DSM d'ordre plus grand par entrelacement colonne par colonne de trames (PR1) d'impulsions de base DSM.

5. Procédé suivant l'une des revendications précédentes,
caractérisé en ce que
on répartit des signaux numériques (AU-4) de débit de données plus grand de la hiérarchie numérique synchrone sur plusieurs trames (PR1) d'impulsions de base DSM.

6. Procédé suivant l'une des revendications précédentes,
caractérisé en ce que
le signal STM-1 et chaque trame (PRN) d'impulsions DSM ont la même durée (125 µs) de période.

7. Procédé suivant l'une des revendications précédentes,
caractérisé en ce que
le rapport des fréquences de cadence de système des trames STM-1 et des trames (PR1) d'impulsions de base DSM est 12 sur 5.

8. Procédé suivant l'une des revendications précédentes,
caractérisé en ce que
quatre trames (PRN) successives d'impulsions DSM-N forment une supertrame DSM.
